# EUROPEAN PATENT APPLICATION

(11) **EP 2 293 118 A1**
(43) Date of publication of application: **09.03.2011**
(21) Application number: 09770258.3
(22) Date of filing: 26.06.2009
(51) Int. Cl.: G01V 8/10, G01S 13/93, G08G 1/16, B60R 21/00

(54) **OBJECT DETECTOR**

(30) Priority: 27.06.2008 JP 2008169152
(71) Applicant: Toyota Jidosha Kabushiki Kaisha, Toyota-shi, Aichi 471-8571 (JP)
(72) Inventor: SHIRAISHI Tatsuya, Toyota-shi Aichi 471-8571 (JP)
(74) Representative: TBK-Patent
(86) International application number: PCT/JP2009/061747
(87) International publication number: WO 2009/157548

(57) **Abstract**

Provided is an object detector capable of setting an appropriate image processing area even when the behavior of a host vehicle is changed. The object detector performs image processing on a specific image processing area of a captured image of the surroundings of a host vehicle and acquires information on an object in the surroundings of the host vehicle. The object detector includes a millimeter-wave sensor (2) and an ECU (4) that acquire position information of an object in the surroundings of the host vehicle and a camera (3) that captures an image of the surroundings of the host vehicle. The object detector sets an image processing area in an image captured by the camera (3) based on the position information of the object acquired by the millimeter-wave sensor (2) and the ECU (4), detects a change in the behavior of the host vehicle, and corrects the set image processing area in accordance with the detected change in the behavior of the host vehicle.

## Description

### Technical Field

The present invention relates to an object detector.

### Background Art

In recent years, drive assist systems such as collision prevention systems, inter-vehicle distance control systems, or automated tracking systems have been developed. In these drive assist systems, it is important to detect a vehicle running on the front side of a host vehicle. There is known an object detector which includes two detection means having different characteristics in order to improve detection accuracy, which are a radar-based detection means such as a millimeter-wave radar and a detection means that uses images captured by a camera. Patent Citation 1 discloses an object detector which sets an image processing area in accordance with measurement results on objects detected by a radar, performs image processing on the set image processing area in an image captured by a camera, and detects information on the objects from the image processing area.

### Citation List

### Patent Literature

[PTL 1] JP-A-2006-151125
[PTL 2] JP-A-2006-258507

### Summary of Invention

### Technical Problem

The behavior of a vehicle is changed in accordance with a road condition or acceleration/deceleration, turning, and the like during running (that is, pitching, rolling, and yawing occur). Therefore, when the image processing area is set in accordance with the results of the measurement by the radar during the pitching, for example, since the radar is unable to detect information in the height direction, there is a case where an entirety or only a portion of an object is present in the set image processing area. In such a case, it is not possible to detect information on an object from the image processing area.

It is therefore an object of the present invention to provide an object detector capable of setting an appropriate image processing area even when the behavior of a host vehicle is changed.

### Solution to Problem

An object detector according to the present invention is an object detector that performs image processing on a specific image processing area of a captured image of the surroundings of a host vehicle and acquires information on an object in the surroundings of the host vehicle, including: a position information acquisition means for acquiring position information of an object in the surroundings of the host vehicle; an image capturing means for capturing an image of the surroundings of the host vehicle; an image processing area setting means for setting an image processing area in the image captured by the image capturing means based on the position information of the object acquired by the position information acquisition means; a vehicle behavior detection means for detecting a change in the behavior of the host vehicle; and a correction means for correcting the image processing area set by the image processing area setting means in accordance with the change in the behavior of the host vehicle detected by the vehicle behavior detection means.

In this object detector, the position information acquisition means detects the position information of an object in the surroundings of the host vehicle, and the image processing area setting means sets an image processing area based on the detected position information. Moreover, in the object detector, the vehicle behavior detection means detects a change (for example, pitching, rolling, and yawing) in the behavior of the host vehicle. Furthermore, in the object detector, the correction means corrects the image processing area in accordance with the detected change in the behavior of the host vehicle. In addition, the object detector performs image processing on the image processing area in the image of the surroundings of the host vehicle captured by the image capturing means, and acquires information on an object in the surroundings of the host vehicle. In this way, in the object detector, by detecting the change in the behavior of the host vehicle and correcting the image processing area in accordance with the change in the behavior, it is possible to set an appropriate image processing area sufficiently containing an object in the surroundings of the host vehicle even when the behavior of the host vehicle is changed. As a result, even when the behavior of the host vehicle is changed, it is possible to reliably acquire information on the object from the corrected image processing area.

In the object detector of the present invention, it is preferable that the correction means corrects the position of the image processing area.

In this object detector, since the correction means corrects the position of the image processing area in accordance with the change in the behavior of the host vehicle, it is possible to reliably correct a positional shift of the image processing area corresponding to the change in the behavior of the host vehicle. For example, when the host vehicle is pitching, since the position of the image processing area is shifted in the vertical direction, the positional shift is corrected by parallelly moving the image processing area in the vertical direction. When the host vehicle is rolling, since the image processing area is rotated in the rolling direction and the position thereof is shifted, the positional shift is corrected by rotating the image processing area.

In the object detector of the present invention, it is preferable that the vehicle behavior detection means calculates an optical flow between plural images which are captured at different times by the image capturing means and detects the change in the behavior of the host vehicle based on the optical flow.

In this object detector, since the vehicle behavior detection means detects the change in the behavior of the host vehicle using the optical flow between plural images which are captured at different times, it is possible to detect the change in the behavior of the host vehicle with high precision.

### Advantageous Effects of Invention

In accordance with the present invention, by detecting a change in the behavior of a host vehicle and correcting an image processing area in accordance with the change in the behavior, it is possible to set an appropriate image processing area even when the behavior of the host vehicle is changed.

### Brief Description of Drawings

Fig. 1 is a configuration diagram of a vehicle surroundings monitoring system according to the present embodiment.
Fig. 2 is an example of a captured image showing the relationship between a rolling of a host vehicle and an image processing area.
Fig. 3 is an example of a captured image showing the relationship between a pitching of a host vehicle and an image processing area.
Fig. 4 is a flowchart showing the flow of image processing area determination in an ECU shown in Fig. 1.

### Description of Embodiments

Hereinafter, an embodiment of an object detector according to the present invention will be described with reference to the accompanying drawings.

In the present embodiment, the object detector according to the present invention is applied to a vehicle surroundings monitoring system mounted on a vehicle. A vehicle surroundings monitoring system according to the present embodiment detects an obstacle (for example, moving objects such as other vehicles, bicycles, or pedestrians and stationary objects such as falling objects) on the front side of a host vehicle and outputs information on the detected obstacle to a drive assist system (collision prevention system or the like) or provides the information to the driver of the host vehicle by means of sound and video. It should be noted that the detecting direction is not limited to the front side, and other directions such as the lateral sides or the rear side are also possible.

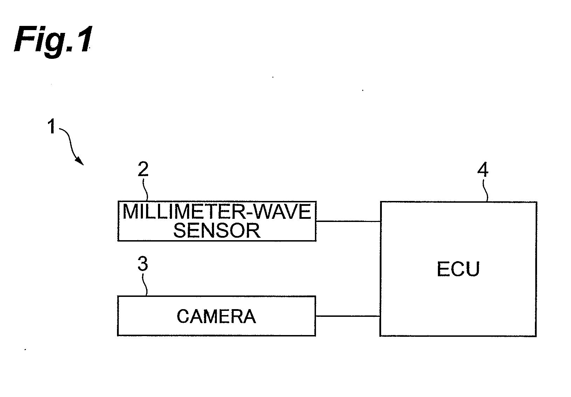

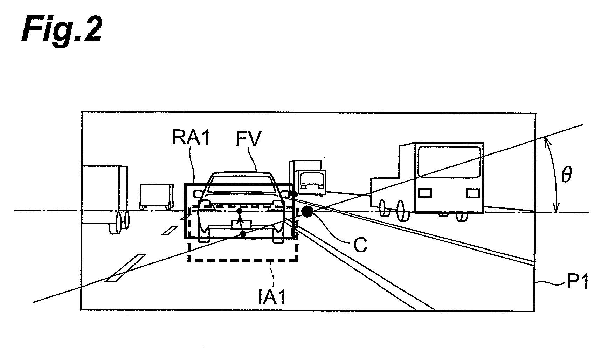

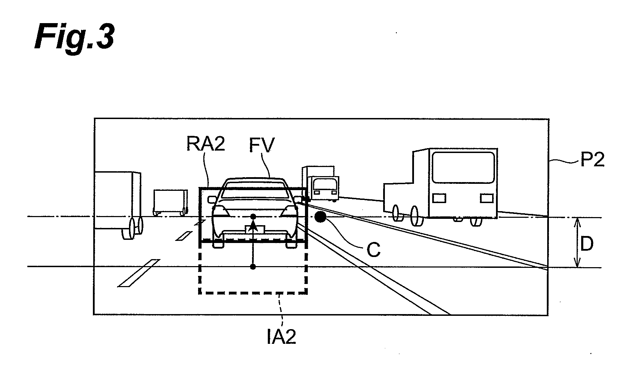

A vehicle surroundings monitoring system 1 according to the present embodiment will be described with reference to Figs. 1 to 3. Fig. 1 is a configuration diagram of a vehicle surroundings monitoring system according to the present embodiment. Fig. 2 is an example of a captured image showing the relationship between a rolling of a host vehicle and an image processing area. Fig. 3 is an example of a captured image showing the relationship between a pitching of a host vehicle and an image processing area.

The vehicle surroundings monitoring system 1 includes a millimeter-wave sensor and a camera as a means for detecting an obstacle in the front side of a host vehicle and sets a sensing area (image processing area) for sensing an obstacle in an image captured by the camera using obstacle information sensed by the millimeter-wave sensor. Particularly, in the vehicle surroundings monitoring system 1, in order to reliably detect the obstacle information from the sensing area even when the behavior of the host vehicle is changed, the change in the behavior of the host vehicle is detected, and the sensing area is corrected in accordance with the change in the behavior. The vehicle surroundings monitoring system 1 includes a millimeter-wave sensor 2, a camera 3, and an ECU (Electronic Control Unit) 4.

In the present embodiment, the functions of the millimeter-wave sensor 2 and ECU 4 correspond to a position information acquisition means as set forth in Claims, the camera 3 corresponds to an image capturing means as set forth in Claims, and the respective functions of the ECU 4 correspond to an image processing area setting means, a vehicle behavior detection means, and a correction means as set forth in Claims.

The millimeter-wave sensor 2 is a radar sensor that detects objects using a millimeter wave. The millimeter-wave sensor 2 is mounted at a predetermined height position (a height position capable of reliably detecting an obstacle to be detected) at the front center of the host vehicle. The millimeter-wave sensor 2 transmits a millimeter wave from the host vehicle towards the front side while scanning the millimeter wave in the horizontal direction and receives reflected millimeter waves. The millimeter wave transmission angle in the vertical direction is fixed at an angle so as to be parallel to the road surface when the vehicle is stopped. The millimeter-wave sensor 2 transmits millimeter wave signals to the ECU 4, the millimeter wave signals including information (for example, a scanning azimuth angle in the horizontal direction, a transmission time, a reception time, and a reflection intensity) on the reflected millimeter waves at respective reflection points (detection points) at which the reflected millimeter waves were received.

The camera 3 is a camera that captures images of the front side of the host vehicle. The camera 3 is mounted on the front center of the host vehicle. The camera 3 captures images of the front side of the host vehicle and transmits information on the captured images to the ECU 4 as image signals. The captured images are frame images captured every predetermined period (for example, 1/30 seconds).

The ECU 4 is an electronic control unit that includes a CPU (Central Processing Unit), a ROM (Read Only Memory), a RAM (Random Access Memory), an image processing chip, and the like, and controls an overall operation of the vehicle surroundings monitoring system 1. In the ECU 4, when an application program stored in the ROM is loaded into the RAM and executed by the CPU, a millimeter wave-based obstacle detecting function, an image processing area setting function, a host vehicle movement amount estimating function, an image processing area correcting function, and an image-based obstacle detecting function are realized. The ECU 4 takes in millimeter wave signals from the millimeter-wave sensor 2 and image signals from the camera 3 every predetermined period and stores the millimeter wave information and the captured image information in a time-sequential manner. Moreover, the ECU 4 performs processing corresponding to the respective functions using the information to obtain information (for example, a relative distance, a relative speed, a lateral position, size information, type information) of a detected obstacle and outputs the obstacle information to the drive assist system or provides the obstacle information to the driver of the host vehicle.

The millimeter wave-based obstacle detecting function will be described. The ECU 4 calculates a relative distance to an obstacle on the front side based on the time from transmission to reception of a millimeter wave using the millimeter wave information at present time (t). Moreover, the ECU 4 calculates a relative speed to the front-side obstacle based on a change in the distances calculated for the present time (t) and the previous time (t-1). Furthermore, the ECU 4 detects the direction of a reflected millimeter wave having the largest intensity among the reflected millimeter waves using the millimeter wave information at the present time (t), calculates an angle between the heading direction of the host vehicle and the direction of the obstacle from the detected direction, and calculates a lateral position from the calculated angle. It should be noted that when the relative speed is calculated, data of a relative distance obtained at a time earlier than the previous time (t-1) may be used.

The image processing area setting function will be described. The ECU 4 sets an image processing area based on the obstacle information (particularly, a relative distance and a lateral position) detected by the millimeter wave-based obstacle detecting function. In this case, the central position of an image processing area is determined on the basis of the relative distance, the lateral position, and the like, and an image processing area having a predetermined vertical width and a predetermined horizontal width is set around the central position.

The host vehicle movement amount estimating function will be described. The ECU 4 calculates an optical flow from a whole image including a frame image at the present time (t) and a frame image of the previous time (t-1). With this optical flow, motions of respective points (objects) in the whole image can be acquired as vectors. Since a moving object such as a front-side vehicle and a stationary object such as a road are present in the image, by calculating the optical flow from the whole image, it is possible to calculate the optical flows of both the moving and stationary objects. Since the optical flow of a moving object includes the motion of the moving object and the motion of the host vehicle, it is difficult to estimate the movement amount of the host vehicle. However, since the optical flow of a stationary object includes only the motion of the host vehicle, it is easy to estimate the movement amount of the host vehicle. It should be noted that when the optical flow is calculated, a frame image obtained at a time earlier than the previous time (t-1) may be used.

Furthermore, the ECU 4 estimates the movement amount (for example, a pitch angle, a roll angle, and a yaw angle) of the host vehicle from the optical flows of respective points (particularly, the optical flows of stationary objects). This estimation may use an 8-point algorithm or the like. Strictly speaking, although the movement amount being estimated is the movement amount of the camera 3 that captured images used for the estimation, since the camera 3 is mounted on the host vehicle, and the camera 3 moves integrally with the host vehicle, the movement amount of the camera 3 corresponds to the movement amount of the host vehicle.

The image processing area correcting function will be described. The ECU 4 determines whether or not the pitch angle calculated by the host vehicle movement amount estimating function is larger than a threshold pitch angle. The threshold pitch angle is a threshold value which is set in advance through experiments or the like so as to determine whether or not the pitch angle has an influence on image processing results (obstacle information) when image processing was performed on the image processing area (the area set by the image processing area setting function) of which the position is shifted due to a pitching of the host vehicle. When the pitch angle is larger than the threshold pitch angle, the ECU 4 calculates a parallel movement amount (pixel number) in the vertical direction within an image from the pitch angle. Moreover, the ECU 4 parallelly moves the position of the image processing area set by the image processing area setting function in accordance with the parallel movement amount in the vertical direction and determines a final image processing area.

In addition, the ECU 4 determines whether or not the roll angle calculated by the host vehicle movement amount estimating function is larger than a threshold roll angle. The threshold roll angle is a threshold value which is set in advance through experiments or the like so as to determine whether or not the roll angle has an influence on an image processing result when image processing was performed on an image processing area of which the position is shifted due to a roll of the host vehicle. When the roll angle is larger than the threshold roll angle, the ECU 4 calculates a rotational movement amount (a rotation angle to the horizontal axis around the image center) within an image from the roll angle. Moreover, the ECU 4 rotates and moves the position of the image processing area set by the image processing area setting function around the image center in accordance with the rotational movement amount and determines a final image processing area.

On the other hand, if the pitch angle is equal to or smaller than the threshold pitch angle, or the roll angle is equal to or smaller than the threshold roll angle, the ECU 4 determines the image processing area set by the image processing area setting function as a final image processing area.

The image-based obstacle detecting function will be described. The ECU 4 extracts an image of the final image processing area determined from the image of the present time (t). Moreover, the ECU 4 detects information on an obstacle from the image of the image processing area. The information on the obstacle detectable from the image includes size information (horizontal width and height) of the obstacle and type information (for example, vehicle and pedestrian) of the obstacle using pattern recognition.

The example shown in Fig. 2 is a case where an image processing area was set based on obstacle information obtained from millimeter wave information when the host vehicle was rolling. In this case, an image processing area IA1 is set at a position shifted in a right-down direction with respect to a front vehicle FV in a captured image P1. In this case, a roll angle of the host vehicle is estimated, and a rotational movement amount (a rotation angle θ to the horizontal axis around an image center C) corresponding to the roll angle is calculated. The image processing area IA1 is rotated clockwise in accordance with the rotation angle θ, whereby an image processing area RA1 is reset. The front vehicle FV is sufficiently included in the image processing area RA1.

The example shown in Fig. 3 is a case where an image processing area was set based on obstacle information obtained from millimeter wave information when the host vehicle was pitching. In this case, an image processing area IA2 is set at a position shifted in a down direction with respect to a front vehicle FV in a captured image P2. In this case, a pitch angle of the host vehicle is estimated, and a parallel movement amount (pixel number D) in the vertical direction corresponding to the pitch angle is calculated. The image processing area IA2 is parallelly moved upward in accordance with the pixel number D, whereby an image processing area RA2 is reset. The front vehicle FV is sufficiently included in the image processing area RA2.

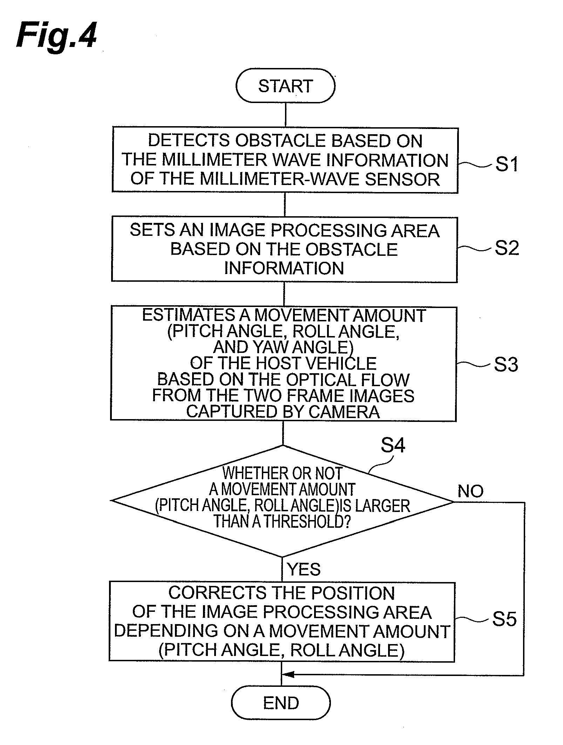

The operation of the vehicle surroundings monitoring system 1 will be described with reference to Figs. 1 to 3. In particular, the image processing area determination by the ECU 4 will be described with reference to the flowchart of Fig. 4. Fig. 4 is a flowchart showing the flow of image processing area determination in the ECU shown in Fig. 1.

The millimeter-wave sensor 2 scans a millimeter wave every predetermined period and transmits millimeter wave signals representing millimeter wave information at respective detection points to the ECU 4. The ECU 4 stores the millimeter wave information in a time-sequential manner whenever the millimeter wave signals are received.

The camera 3 captures images of the front side of the host vehicle every predetermined period and transmits image signals representing information on the images to the ECU 4. The ECU 4 stores the information on the frame images in a time-sequential manner whenever the image signals are received.

The ECU 4 reads the millimeter wave information of the present time (t) and detects obstacle information (for example, relative distance, relative speed, and lateral position) based on the millimeter wave information (S1). Moreover, the ECU 4 sets an image processing area based on the obstacle information (S2).

The ECU 4 reads a frame image of the present time (t) and a frame image of the previous time (t-1), calculates an optical flow from the two frame images, and estimates a movement amount (pitch angle, roll angle, and yaw angle) of the host vehicle based on the optical flow (S3).

The ECU 4 determines whether or not the pitch angle is larger than a threshold pitch angle and whether or not the roll angle is larger than a threshold roll angle (S4).

When it is determined in S4 that the pitch angle is equal to or smaller than the threshold pitch angle and the roll angle is equal to or smaller than the threshold roll angle, the ECU 4 finalizes the image processing area set in S2.

On the other hand, when it is determined in S4 that the pitch angle is larger than the threshold pitch angle, the ECU 4 corrects the position of the image processing area in accordance with a parallel movement amount in the vertical direction corresponding to the pitch angle and finalizes the corrected image processing area (S5). Moreover, when it is determined in S4 that the roll angle is larger than the threshold roll angle, the ECU 4 corrects the position of the image processing area in accordance with a rotational movement amount corresponding to the roll angle and finalizes the corrected image processing area (S5).

Moreover, the ECU 4 detects obstacle information (for example, size information and type information) from the finalized image processing area in the image of the present time (t).

The ECU 4 outputs the detected obstacle information (for example, relative distance, relative speed, lateral position, size information, and type information) to the drive assist system or provides the detected obstacle information to the driver by means of sound and video.

According to this vehicle surroundings monitoring system 1, by detecting the movement amount of the host vehicle and correcting the image processing area in accordance with the movement amount, it is possible to set an appropriate image processing area sufficiently containing the obstacle in the surroundings of the host vehicle even when the behavior of the host vehicle is changed. As a result, even when the behavior of the host vehicle is changed, it is possible to reliably detect information on the object from the corrected image processing area. In addition, according to the vehicle surroundings monitoring system 1, by estimating the movement amount of the host vehicle using an optical flow between images which are captured at different times, it is possible to detect the movement amount of the host vehicle with high precision. In particular, since the optical flow is calculated from the whole image, it is possible to detect the movement amount of the host vehicle without being influenced by a motion of a moving object in the image.

Although the embodiment of the present invention has been described hereinabove, the present invention is not limited to the embodiment but may be embodied in various forms.

For example, although the present embodiment was applied to a vehicle surroundings monitoring system, the present invention can be applied to other object detector such as a pedestrian detector or an object detecting function in a drive assist system such as a collision prevention system, an inter-vehicle distance control system, or an automated tracking system.

In addition, although in the present embodiment, the millimeter-wave sensor was used as the position information acquisition means, other radar sensors such as a laser sensor or an ultrasonic sensor, sensors that use images captured by a camera, and other means such as an infrastructure may be used.

In addition, although in the present embodiment, an optical flow was used for detecting the behavior of the host vehicle, the vehicle behavior may be detected by other methods.

### Industrial Applicability

The present invention is applicable to an object detector.

### Reference Signs List

- 1:: Vehicle Surroundings Monitoring system
- 2:: Millimeter-Wave Sensor
- 3:: Camera 4: ECU

## Claims

1. An object detector that performs image processing on a specific image processing area of a captured image of the surroundings of a host vehicle and acquires information on an object in the surroundings of the host vehicle, comprising:
a position information acquisition means for acquiring position information of an object in the surroundings of the host vehicle;
an image capturing means for capturing an image of the surroundings of the host vehicle;
an image processing area setting means for setting an image processing area in the image captured by the image capturing means based on the position information of the object acquired by the position information acquisition means;
a vehicle behavior detection means for detecting a change in the behavior of the host vehicle; and
a correction means for correcting the image processing area set by the image processing area setting means in accordance with the change in the behavior of the host vehicle detected by the vehicle behavior detection means.

2. The object detector according to claim 1, wherein the correction means corrects the position of the image processing area.

3. The object detector according to claim 1 or 2, wherein the vehicle behavior detection means calculates an optical flow between plural images which are captured at different times by the image capturing means and detects the change in the behavior of the host vehicle based on the optical flow.
